(19)

Europäisches
Patentamt
European
Patent Office
Office européen
des brevets

(11)  **EP 4 596 214 A1**

(12)                        **EUROPEAN PATENT APPLICATION**

(43) Date of publication:
    **06.08.2025 Bulletin 2025/32**

(51) International Patent Classification (IPC):
    **B29C 45/34** (2006.01)    **B22C 9/06** (2006.01)
    **B29C 45/43** (2006.01)

(21) Application number: **25155823.5**

(52) Cooperative Patent Classification (CPC):
    **B29C 45/345; B22C 9/067; B29C 45/43**

(22) Date of filing: **04.02.2025**

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH MA MD TN**

(30) Priority: **05.02.2024 TW 113104540
           08.04.2024 CN 202410415186**

(71) Applicant: **voestalpine Technology Institute (Asia)
    Co. Ltd.
    248-87 Taipei (TW)**

(72) Inventors:
    • **Chen, Kuan-Ying**
      **248-87 Taiwan, R.O.C. (TW)**
    • **Wang, Shang-Chih**
      **248-87 Taiwan, R.O.C. (TW)**

(74) Representative: **WSL Patentanwälte
    Partnerschaft mbB
    Kaiser-Friedrich-Ring 98
    65185 Wiesbaden (DE)**

(54)    **A DEVICE FOR VENTING AND EJECTION, AND A MOLD WITH DEVICE THEREIN**

(57)    The invention provides a device for venting and ejection, and an injection mold for plastic injection. The device for venting and ejection comprises gas permeable layer and a gas storage chamber, wherein the gas permeable layer is arranged at the end of filling area in the injection mold, and the gas permeable layer is made of porous metal materials and is full of pores and can be used for the gas to pass through, and the gas storage chamber is arranged on the side of the gas permeable layer opposite the mold cavity, and a cavity which only communicates with the pores is arranged in the gas storage chamber. During the injection molding process, after the raw materials entering into the mold cavity, the gas in the mold cavity is compressed by the raw materials, and then passes through the gas permeable layer to achieve effective exhaust, so as to facilitate filling of the raw materials. The compressed air passing through the gas permeable layer, entering the gas storage chamber, and can be stored in the cavity, and then released back to the mold cavity after the injection is completed, thus the vacuum state between the finished product and the wall surface of the mold cavity is effectively broken to make it easy for the finished product to unmold. The invention has the effects of venting and ejecting, and can reduce the use of demolding device.

Figure 2B

# Description

## [Technical field]

The present invention relates to the field of injection molding technology, and more particularly, to a device for venting and ejection, and an injection mold having the device for venting and ejection.

## [Background]

The injection molding technique is mainly to inject a molten material into a mold by filling the entire mold cavity, and to unmold after the material is cooled and solidified, so that the finished product formed after cooling can be taken out. During the injection molding process, proper venting and effective demolding are critical steps to ensure product quality and molding efficiency.

Further description is provided. During the process of injecting the material into the mold, the material entering the mold squeezes the gas in the mold cavity, causing the pressure in the mold cavity to increase, resulting in an increase in the resistance to the flow of the material. Therefore, the conventional solution is to add a design for exhaust to the injection mold. For example, an exhaust groove to communicate with the outside is formed at a suitable position of the mold clamping portion of the mold cavity, so as to exhaust the gas in the mold cavity and completely fill the material in the mold cavity. In addition, after the injection mold filling is complete, since the gas in the mold cavity is completely removed, a vacuum state is formed between the surface of the finished product and the mold cavity, resulting in the finished product firmly adhered within the mold cavity, and thus demolding becomes difficult. At this time, an demolding device has to be used to separate the product from the mold in order to complete the injection process. For example, by means of an ejector, or by external gas-entraining design. The ejector, or the Compressed gas outside the mold is introduced into the mold cavity to help smoothly unmold the finished product, and with the use of an ejection mechanism the finished product is uniformly ejected, which can ensure the demolding and reduction of breakage of the finished product.

However, the conventional exhaust grooves and demolding devices have limitations in handling residual gas and vacuum conditions in the mold cavity. For example, incomplete venting can result in the incompleteness of the filling of material due to gas residue thus affecting the integrity of the finished product; or the high temperature generated after gas compression may result in burning marks on the surface of the finished product and reducing the production yield.

Therefore, a solution to break through the limitations of the conventional exhaust grooves and demolding devices could give the benefit to solve the above-mentioned difficulties and drawbacks in the prior art.

## [Summary]

Accordingly, the present invention is directed to providing a device for venting and ejection, and an injection mold comprising the same, having functions of venting and ejection, and can reduce the use of demolding device.

To achieve the above objective, the present invention provides a device for venting and ejection for an injection mold, including an fixed mold provided with a feeding inlet and a movable mold, wherein the fixed mold and the movable mold form a mold cavity when they are clamped together, wherein the mold cavity communicates with the feeding inlet used for the feeding of raw material to the mold cavity to form the finished product. The device for venting and ejection includes a gas permeable layer and a gas storage chamber comprising a cavity. The gas permeable layer is arranged in the movable mold and is positioned at the end of the mold cavity, and the gas permeable layer is made of porous metal material and is provided with a plurality of interconnecting pores, and the pores allow gas to enter and exit the gas permeable layer. The gas storage chamber is arranged on a side of the gas permeable layer opposite the mold cavity, and the cavity which only communicates with the pores is arranged in the gas storage chamber. In the process of injecting the raw material into the mold cavity for forming, the gas in the mold cavity is compressed, passes through the gas permeable layer and is stored in the cavity;

during the process of separating the fixed mold from the movable mold to obtain the finished product, the compressed gas stored in the cavity is released to the gas permeable layer and is discharged back to the mold cavity through the pores, so as to facilitate or assist the finished product to be separated from the mold cavity.

Further, the present invention also provides an injection mold comprising such device for venting and ejection. The injection mold comprises an fixed mold, a movable mold, and a device for venting and ejection. The fixed mold is provided with a feeding inlet, and the fixed mold and the movable mold form a mold cavity when they are clamped together, wherein the mold cavity communicates with the feeding inlet for forming a finished product after raw material have been fed from the feeding inlet to the mold cavity. The device for venting and ejection includes a gas permeable layer and a gas storage chamber which comprises a cavity. The gas permeable layer, which is arranged in the movable mold and is positioned at the end of the mold cavity, and the gas permeable layer is made of porous metal material and provided with a plurality of interconnecting pores, and the pores allow gas to enter and exit the gas permeable layer. The gas storage chamber is arranged on the side of the gas permeable layer opposite to the mold cavity, and the gas storage chamber comprising a cavity which only communicates with the pores. In the process of injecting the raw material into the mold cavity for molding, the gas in the mold cavity is compressed, passes through the gas permeable layer and is stored in the cavity of the gas storage chamber; during the process of separating the fixed mold from the movable mold to obtain the finished product, the compressed gas stored in the cavity is released to the gas permeable layer and is discharged back to the mold cavity through the pores, thereby facilitating or assisting the finished product to be separated from the mold cavity.

According to an embodiment of the present application, the device for venting and ejection is of an integrally formed metal structure.

According to an embodiment of the present application, the device for venting and ejection may be manufactured by powder metallurgy or additive manufacturing.

According to an embodiment of the present application, the side of the gas permeable layer adjacent the mold cavity has a higher density than the side of the gas permeable layer away from the mold cavity.

According to an embodiment of the present application, the thickness of the area of the gas permeable layer having the higher density is in the range of 1 to 2 millimeters (mm).

According to an embodiment of the present application, other than the region having the higher density, the remaining regions of the gas permeable layer are geometric bodies based on crystal structure.

According to an embodiment of the present application, the density of the gas permeable layer is gradually reduced from the side adjacent the mold cavity toward the side away from the mold cavity.

Compared with the prior art, the invention has the following advantages:

1. The device for venting and ejection, and the injection mold provided by the present invention uses a gas permeable layer of porous metal and a cavity which only communicates with the pores of the gas permeable layer is provided, thereby improving the effect of the traditional exhaust groove and the filling efficiency during the injection molding process.

2. The device for venting and ejection, and the injection mold provided by the present invention can achieve effective gas exhaust, and reduce residual gas which after compression and temperature rise may cause burn damage to the surface of a finished product.

3. The device for venting and ejection, and the injection mold provided by the present invention can effectively break the vacuum state formed between the surface of a finished product and the wall surface of the mold cavity during filling of injection raw materials, reduce the force required for demolding and reduce the need for the use of ejection device.

4. The device for venting and ejection, and the injection mold provided by the present invention does not require the use of externally connected ejection device to eject the compressed gas, and reduces the complexity of mold design.

The purpose, technical description, features and effects of the present invention will be more easily understood by the following detailed description of the embodiments.

[Brief description of drawings]

Fig. 1 is a schematic view of an injection mold with a device for venting and ejection according to an embodiment of the present invention.
Fig. 2A is an external view of the device for venting and ejection according to the embodiment of the present invention.
Fig. 2B is a cross-sectional view of the device for venting and ejection according to the embodiment of the present invention.
Fig. 3A to 3C are schematic views illustrating the operation of the device for venting and ejection according to the embodiment of the present invention.

[Detailed description]

Embodiments of the invention will be further illustrated by the following description in conjunction with the associated drawings. Wherever possible, the same reference numbers will be used throughout the drawings and the description to refer to the same or like components. In the drawings, the shape and thickness may be exaggerated for simplicity and convenience. It is to be understood that the assemblies which are not specifically shown in the drawings or described in the specification are well known to those skilled in the art. Many variations and modifications can be made by those skilled in the art in light of the teachings of present application.

It should be noted that all the directional indicators (such as up, down, left, right, front, and back) in the embodiments of the present invention are only used for explaining the components' relative position relationships, their movement situation, and the like in a specific bearing (as shown in the drawings), and if the specific bearing is changed, the directional indicator is changed accordingly. In the description of the invention, the singular articles "a", "an", and "the" include plural elements or components unless the context clearly dictates otherwise. Also, in the description of the present invention, "plurality" or "a plurality" means two or more.

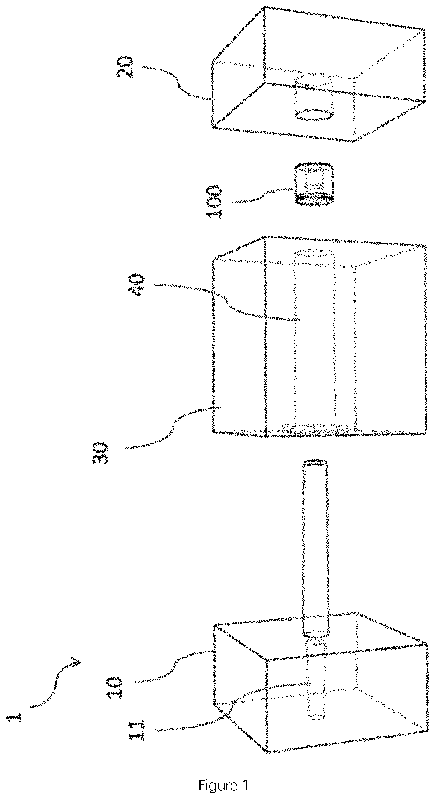

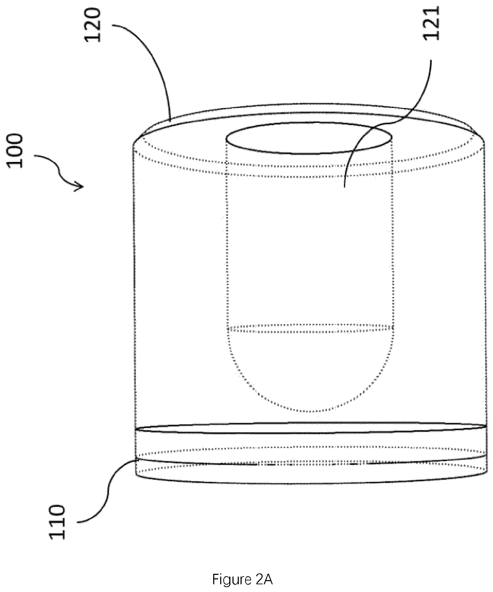

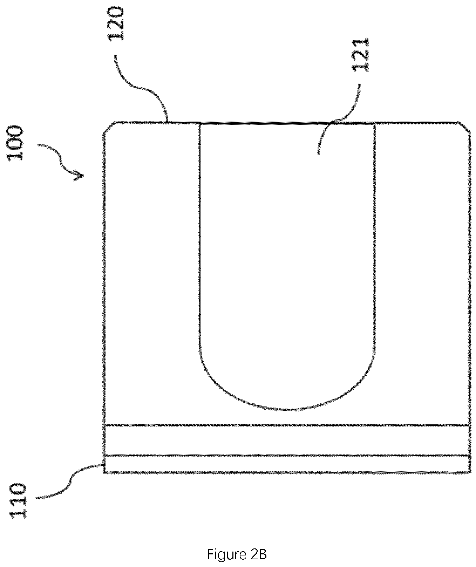

Referring to Fig. 1, Fig.2A and Fig.2B, Fig. 1 is a schematic view of the injection mold with the device for venting and ejection according to an embodiment of the present invention, Fig. 2A is an external view of the device for venting and ejection according to the embodiment of the present invention, and Fig. 2B is a cross-sectional view of the device for venting and ejection according to the embodiment of the present invention. The device for venting and ejection 100 of the embodiment of the invention is used as a part of the injection mold 1, and is located at a position of the injection mold 1 where the molding of the finished product is almost complete, and is used for simultaneously providing the functions of gas exhaust and ejection, thereby effectively improving the effect of the traditional exhaust groove and reducing the necessity of using an demolding device. The injection mold 1 of the present embodiment includes an fixed mold 10 and a movable mold 20, which are respectively shown on the left side and the right side in the figure. A middle plate mold 30 is disposed between the fixed mold 10 and the movable mold 20. The fixed mold 10 is provided with a feeding inlet 101 for injecting a material such as metal or plastic. The fixed mold 10 and the movable mold 20 form a mold cavity 40 when the molds are clamped together. The mold cavity 40 communicates with the feeding inlet 101 for injecting the material from the feeding inlet 11 into the mold cavity 40 to form a finished product. The device for venting and ejection 100 is mainly composed of a gas permeable layer 110 and a gas storage chamber 120. The gas permeable layer 110 is disposed on the movable mold 20 and located at the end of the mold cavity 40, that is, the end of the filled part (hereinafter referred to as the filling end). The gas permeable layer 110 is made of porous metal material and provided with a plurality of interconnected pores, which allow gas to enter and exit the gas permeable layer 110, so as to facilitate the removal or transfer of the gas at the filling end. The porosity of the gas permeable layer 110 is preferably adjusted according to actual requirements to ensure effective gas flow and complete filling of the mold cavity 40 with the material. In addition, the gas storage chamber 120 is disposed on the side of the gas permeable layer 110 opposite the mold cavity 40, and the gas storage chamber 120 is provided with a cavity 121 which only communicates with the pores. The cavity 121 receives compressed gas during the filling process of the raw material to ensure the completion of filling, and releases the gas after the injection molding is complete and the molds are opened to eliminate the vacuum state between the finished product and the wall surface of the mold cavity 40, thereby providing an ejection force, reducing the mold-drawing force required for demolding, and reducing the use of an demolding device.

In the present invention, the device for venting and ejection 100 may be an integrally formed metal structure. The device for venting and ejection 100 can be manufactured by using gas permeable metal products made by conventional powder metallurgy method, the size and the specification are fixed, and the density of the gas permeable layer 110 is uniform, resulting in relatively high resistance when the gas passes therethrough. Thus, the device for venting and ejection 100 can preferably be manufactured by three-dimensional printing method. By adjusting printing parameters, the device for venting and ejection 100 manufactured by three-dimensional printing method can accurately control the porosity and the size of the internal cavity of the metal structure, and can provide customized dimension specifications and multiple density design according to the requirements of the injection molding products to ensure optimal gas exhaust and demolding effects. The multiple density design of the present invention specifically means that the side of the gas permeable layer 110 adjacent the mold cavity 40 is designed to have a higher density than the side of the gas permeable layer 110 away from the mold cavity 40. Further, the gas permeable layer 110 has a thickness range of about 1 to 2 millimeters (mm) in the area with higher density (i.e. the distance from the side adjacent the mold cavity 40 to the side away from the mold cavity 40). Of course, the thickness can be adjusted according to manufacture requirements. With the exception of the region with higher density the remaining regions can be based on the geometry of crystal structure, such as a Triple Periodic Minimum Surface (TPMS) structure. Further, the density of the gas permeable layer 110 may be designed as gradually reduced from the side adjacent the mold cavity 40 to the side away from the mold cavity 40.

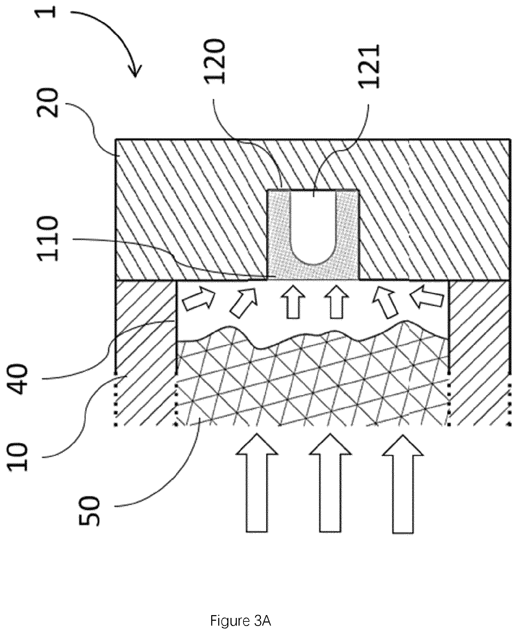

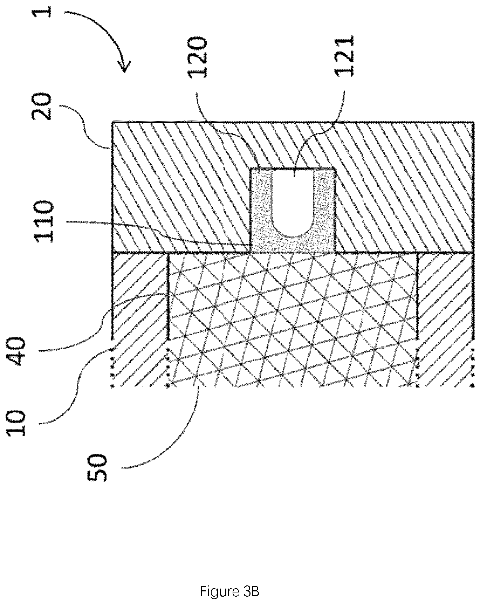

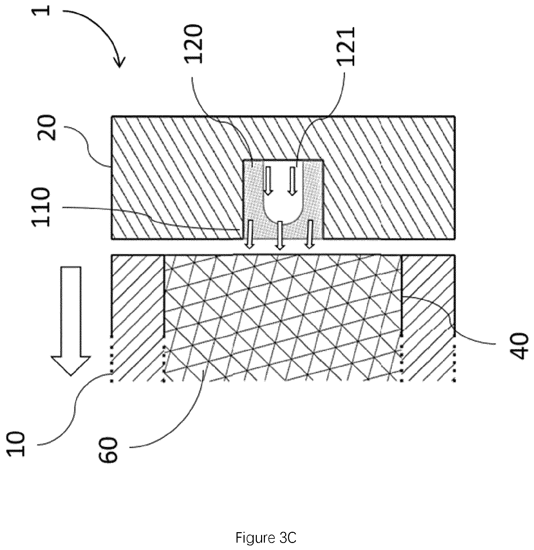

Referring to Figs.3A to 3C, an operation of the device for venting and ejection 100 according to the embodiment of the present invention is described. The injection mold of the present embodiment includes an fixed mold 10 and a movable mold 20, which are shown on the left and right sides of the drawing. First, as shown in Fig. 3, during the filling process of raw material 50 into the mold cavity 40, the gas in the mold cavity 40 is compressed and passes through the gas permeable layer 110, which can help the injection mold 1 to effectively exhaust gas, ensure the complete filling of the raw material 50, and simultaneously reduce residual gas in the mold cavity 40 which after compression and temperature rise may cause burn damage to the surface of a finished product, and avoid leaving burn marks. Then, as shown in Fig.3B, the gas entering the gas permeable layer 110 flows into the cavity 121, and the cavity 121 can compress the gas to accumulate the pressure. As shown in Fig. 3C, after the injection molding is completed, in the process of separating the fixed mold 10 from the movable mold 20 to obtain the finished product 60, the pressure accumulated in the cavity 121 allows the gas to be released to the gas permeable layer 110 and to be discharged back into the mold cavity 40 through the pores of the gas permeable layer 110, so as to break the vacuum state between the finished product 60 and the wall surface of the mold cavity 40, thereby providing the mold-drawing force required for demolding to facilitate or assist the finished product 60 to be separated from the mold cavity 40.

The pressure accumulation effect in the device for venting and ejection of the present invention is explained below. According to the ideal gas equation, the following relationship exists among pressure (P), volume (V), and temperature (T):

$$P\,V = n\,R\,T => \frac{P_1 V_1}{T_1} = \frac{P_2 V_2}{T_2}$$

In a device for venting and ejection, the gas in the filling end is guided to a cavity which in a closed state acts as a desired gas system. Assuming that the gas in the filling end has pressure Pi, volume Vi, temperature $T_1$, and the gas within the cavity has pressure $P_2$, volume $V_2$, temperature $T_2$. In the case of $T_1 = T_2$, $P_1 \times V_1 = P_2 \times V_2$. According to the desired gas equation, the pressure increases as the gas volume is compressed. This principle allows the gas which is in the filling end originally can be decompressed through the cavity in the device for venting and ejection, and the accumulated pressure can be adjusted by designs of different cavity volumes. The required rebound force may be provided for different designs of injection mold, and in turn provides additional force to help the ejection of the injection molding finished product.

Next, in order to test whether the injection mold has a proper venting function, the present invention evaluates the venting function by observing whether the finished product at the filling end is cracked or burnt. Through experiments, it was found that, in cases where the device for venting and ejection is not used during demolding, there may be short injection and incomplete filling when the gas pressure $P_1$ is greater than the injection filling tail end pressure $P_2$. At the same time, adiabatic compression phenomenon causes reduction in the gas volume Vi, resulting in an increase in the temperature $T_1$, which in turn causes cracking or scorching in the finished product at the filling end. On the other hand, in cases where the device for venting and ejection of the present invention is used during demolding, it was found that, the above phenomenon is improved by using the device for venting and ejection of the present invention, and the filling can be fully completed without cracking or scorching in the finished product.

In addition, the present invention uses a tension meter externally connected to the finished product at the filling end and applies the same tension using a mechanical arm of an injection molding machine to test the effects of the device for venting and ejection of the present invention on the mold-drawing force after being connected to the filling end. In this test, the cavity volumes in group A, B, C, D, E are respectively designed to be 76 mm$^3$, 100 mm$^3$, 144 mm$^3$, 200 mm$^3$, and 276 mm$^3$, and the results are shown in Table 1. It is shown that the cavity can contain the compressed gas at the filling end, and the change in the pressure of the gas can help to reduce the mold-drawing force, thereby improving the vacuum state between the mold and the surface of the finished product.

Table1

| Group | Mold-drawing force (kg) | |
|---|---|---|
| | Mean value | Standard deviation |
| A | 2.74 | 0.30 |
| B | 3.12 | 0.41 |
| C | 3.19 | 0.36 |
| D | 3.20 | 0.40 |
| E | 3.29 | 0.41 |

In summary, according to the device for venting and ejection and the injection mold provided by the present invention, the use of the gas permeable layer made of porous metal material and the provision of the cavity that only communicates with the pores of the gas permeable layer can improve gas venting and thus the filling efficiency in the injection molding process is improved. Damage to the surface of the finished product caused by the compression and temperature rise of residual gas can be reduced, and the vacuum state between the finished product and the wall surface of the mold cavity is also reduced. The demolding force can be reduced, and the injection molding process is more stable and efficient, and the need to use ejection device is reduced, and the complexity of mold design is reduced. The invention may be applied to relevant fields including metal 3D printing manufacture, plastic injection manufacture process, mold manufacturing and the like, and can bring notably innovative and practical values to professionals in such fields.

The above description is only a preferred embodiment of the present invention, and is not intended to limit the scope of the invention. Therefore, the equivalent changes or modifications according to the features and spirit of the present invention should be included in the protection scope of the invention.

[description of reference number]

1: injection mold
10: fixed mold
11: feeding inlet
20: movable mold
30: middle plate mold
40: mold cavity
50: raw materials
60: finished product
100: device for venting and ejection
110: gas permeable layer
120 gas storage chamber
121 cavity

## Claims

1. A device for venting and ejection for an injection mold, the injection mold including an fixed mold provided with a feeding inlet and a movable mold, wherein the fixed mold and the movable mold form a mold cavity when they clamped together, wherein the mold cavity communicates with the feeding inlet from which raw material is fed into the mold cavity for forming a finished product, wherein the device for venting and ejection includes:

   a gas permeable layer disposed on the movable mold and is positioned at the end of the mold cavity, wherein the gas permeable layer is made of porous metal material and provided with a plurality of interconnected pores, and the pores allow gas to enter and exit the gas permeable layer; and
   a gas storage chamber arranged on the side of the gas permeable layer opposite the mold cavity, wherein the gas storage chamber comprises a cavity which only communicates with the pores;
   in the process of injecting the raw material into the mold chamber for forming, the gas in the mold chamber is compressed, passes through the gas permeable layer and is stored in the cavity;
   during the process of separating the upper mold from the lower mold to obtain the finished product, the compressed gas stored in the cavity is released to the gas permeable layer and is discharged back to the mold chamber through the pores to facilitate or assist the finished product to be separated from the mold chamber.

2. The device for venting and ejection according to claim 1, wherein the device for venting and ejection is of an integrally formed metal structure.

3. The device for venting and ejection according to claim 1, wherein the device for venting and ejection is manufactured by powder metallurgy or three-dimensional printing.

4. The device for venting and ejection according to claim 1, wherein the side of the gas permeable layer adjacent the mold chamber has a higher density than the side of the gas permeable layer away from the mold chamber.

5. The device for venting and ejection according to claim 4, wherein the thickness of the region of the gas permeable layer having the higher density is in a range of 1 to 2 millimeters (mm).

6. The device for venting and ejection according to claim 5, wherein the remaining regions of the gas permeable layer other than the region having the higher density are geometric bodies based on a crystal structure.

7. The device for venting and ejection according to claim 4, wherein the density of the gas permeable layer is gradually reduced from the side adjacent the mold chamber toward the side away from the mold chamber.

8. An injection mold comprising:

   an upper mold and a lower mold, the upper mold is provided with a feeding inlet, wherein the upper mold and the lower mold form a mold chamber when clamped together, wherein the mold chamber communicates with the feeding inlet from which raw material is fed into the mold chamber for forming a finished product, and
   a device for venting and ejection, comprising:

      a gas permeable layer disposed on the lower mold and is positioned at the end of the mold chamber, wherein the gas permeable layer is made from porous metal material and provided with a plurality of interconnected pores, and the pores allow gas to enter and exit the gas permeable layer; and
      a gas storage chamber arranged on the side of the gas permeable layer opposite the mold chamber, wherein the gas storage chamber comprises a cavity which only communicates with the pores;
      in the process of injecting the raw material into the mold chamber for forming, the gas in the mold chamber is compressed, passes through the gas permeable layer and is stored in the cavity;
      during the process of separating the upper mold from the lower mold to obtain the finished product, the compressed gas stored in the cavity is released to the gas permeable layer and is discharged back to the mold chamber through the pores, so as to facilitate or assist the finished product to be separated from the mold chamber.

9. The injection mold according to claim 8, wherein the device for venting and ejection is of an integrally formed metal structure.

10. The injection mold according to claim 8, wherein the device for venting and ejection is manufactured by powder metallurgy or three-dimensional printing.

11. The injection mold according to claim 8, wherein the side of the gas permeable layer adjacent the mold chamber has a higher density than the side of the gas permeable layer away from the mold chamber.

12. The injection mold according to claim 11, wherein the thickness of the area of the gas permeable layer having the higher density is in a range of 1 to 2 millimeters (mm).

13. The injection mold according to claim 12, wherein the remaining regions of the gas permeable layer other than the region having the higher density are geometric bodies based on a crystal structure.

14. The injection mold according to claim 12, wherein the density of the gas permeable layer is gradually reduced from the side adjacent the mold chamber toward the side away from the mold chamber.

Figure 1

Figure 2A

EP 4 596 214 A1

Figure 2B

10

Figure 3A

Figure 3B

Figure 3C

Europäisches
Patentamt

European
Patent Office

Office européen
des brevets

# EUROPEAN SEARCH REPORT

**Application Number**

EP 25 15 5823

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Sintered Porous Candle Filter - No Particle Shedding", , 23 September 2023 (2023-09-23), pages 1-1, XP093283942, Retrieved from the Internet: URL:https://web.archive.org/web/20230923221858/https://www.boedon.com/products/industrial-filtration/chemical/candle-filter/sintered-porous-candle-filter.html * page 1 - page 3 * | 1-7 | INV. B29C45/34 B22C9/06 B29C45/43 |
| X | WO 2019/097036 A1 (GORE W L & ASS GMBH [DE]) 23 May 2019 (2019-05-23) * page 17 - page 21 * * figure 1 * | 1,4-7 | |
| A | JP H11 277586 A (SANYO ELECTRIC CO) 12 October 1999 (1999-10-12) * paragraphs [0013], [0023] - [0026]; figures 1-4 * | 1-14 | |
| A | JP 2012 035469 A (SEKISUI TECHNO SEIKEI KK) 23 February 2012 (2012-02-23) * paragraph [0020] - paragraph [0025]; figures 1-6 * | 1-14 | TECHNICAL FIELDS SEARCHED (IPC) B29C B22C |
| A | JP 2004 299085 A (MITSUBISHI MATERIALS CORP) 28 October 2004 (2004-10-28) * paragraph [0026] - paragraph [0042]; figures 1-3 * | 1-14 | |

The present search report has been drawn up for all claims

| Place of search | Date of completion of the search | Examiner |
|---|---|---|
| Munich | 5 June 2025 | Raicher, Gerald |

EPO FORM 1503 03.82 (P04C01)

## ANNEX TO THE EUROPEAN SEARCH REPORT
## ON EUROPEAN PATENT APPLICATION NO.

EP 25 15 5823

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2025

| Patent document cited in search report | Publication date | Patent family member(s) | Publication date |
|---|---|---|---|
| WO 2019097036 A1 | 23-05-2019 | WO 2019096419 A1<br>WO 2019097036 A1 | 23-05-2019<br>23-05-2019 |
| JP H11277586 A | 12-10-1999 | JP 2877803 B1<br>JP H11277586 A | 05-04-1999<br>12-10-1999 |
| JP 2012035469 A | 23-02-2012 | JP 5605807 B2<br>JP 2012035469 A | 15-10-2014<br>23-02-2012 |
| JP 2004299085 A | 28-10-2004 | NONE | |

EPO FORM P0459

For more details about this annex : see Official Journal of the European Patent Office, No. 12/82